# EUROPEAN PATENT SPECIFICATION

(11) **EP 3 908 001 B1**
(45) Date of publication and mention of the grant of the patent: **12.02.2025**
(21) Application number: 19906898.2
(22) Date of filing: 30.12.2019
(51) Int. Cl.: H04N 19/573, H04N 19/423, H04N 19/44, H04N 21/4402, H04N 21/854

(54) **VIDEO ENCODING AND DECODING METHOD AND DECODING DEVICE**
VIDEOCODIERUNGS- UND -DECODIERUNGSVERFAHREN UND -DECODIERUNGSVORRICHTUNG
PROCÉDÉ ET DISPOSITIF DE CODAGE ET DISPOSITIF DE DÉCODAGE VIDÉO

(30) Priority: 02.01.2019 CN 201910002807
(43) Date of publication of application: 10.11.2021
(73) Proprietor: Zhejiang University, Zhejiang 310058 (CN)
(72) Inventor: YU, Lu, Hangzhou, Zhejiang 310007 (CN); GAO, Xiaoding, Hangzhou, Zhejiang 310007 (CN); YU, Hualong, Hangzhou, Zhejiang 310007 (CN)
(74) Representative: Cabinet Chaillot
(86) International application number: PCT/CN2019/129806
(87) International publication number: WO 2020/140863

(56) References cited:
- CN-A- 104 053 012
- CN-A- 104 768 011
- CN-A- 107 634 930
- CN-A- 108 243 339
- US-A1- 2013 170 544
- US-A1- 2014 086 328
- YU HUALONG ET AL: "Improved DASH for Cross-Random-Access Prediction Structure in Video Coding", 2018 IEEE INTERNATIONAL SYMPOSIUM ON CIRCUITS AND SYSTEMS (ISCAS), IEEE, 27 May 2018 (2018-05-27), pages 1 - 5, XP033434474, DOI: 10.1109/ISCAS.2018.8351027
- ZUO XUGUANG ET AL: "Library based coding for videos with repeated scenes", 2015 PICTURE CODING SYMPOSIUM (PCS), IEEE, 3 June 2015 (2015-06-03), pages 100 - 104, XP033184674, DOI: 10.1109/PCS.2015.7170055
- XUGUANG ZUO ET AL: "Scene-library-based video coding scheme exploiting long-term temporal correlation", JOURNAL OF ELECTRONIC IMAGING., vol. 26, no. 04, 30 August 2017 (2017-08-30), US, pages 1, XP055439201, ISSN: 1017-9909, DOI: 10.1117/1.JEI.26.4.043026
- R. SJOBERG ET AL: "Overview of HEVC high-level syntax and reference picture management", IEEE TRANSACTIONS ON CIRCUITS AND SYSTEMS FOR VIDEO TECHNOLOGY, vol. 22, no. 12, 5 October 2012 (2012-10-05), USA, pages 1 - 14, XP055045360, ISSN: 1051-8215, DOI: 10.1109/TCSVT.2012.2223052
- YU H ET AL: "Video coding based on cross RAP referencing (CRR)", no. JVET-M0360, 14 January 2019 (2019-01-14), XP030202114, Retrieved from the Internet <URL:http://phenix.int-evry.fr/jvet/doc_end_user/documents/13_Marrakech/wg11/JVET-M0360-v4.zip JVET-M0360-v4.doc> [retrieved on 20190114]
- YU H ET AL: "Video coding based on cross RAP referencing (CRR)", no. JVET-M0360, 14 January 2019 (2019-01-14), XP030202115, Retrieved from the Internet <URL:http://phenix.int-evry.fr/jvet/doc_end_user/documents/13_Marrakech/wg11/JVET-M0360-v4.zip JVET-M0360.pptx> [retrieved on 20190114]

## Description

### FIELD OF THE INVENTION

This invention relates to methods and apparatus of video encoding and decoding.

### BACKGROUND

### Library-based Video Coding:

In order to make full use of the mutual information between multiple RASs in picture encoding, the encoder/decoder can select picture, from library, which has the similar texture content with the current encoding/decoding picture as reference picture when encoding/decoding the current picture. The special reference picture from library is referred to as library picture and the dataset storing the library picture as library. The method of allowing that one or multiple pictures in a video sequence uses one or multiple library pictures as reference picture for encoding/decoding is named as library-based video coding. Encoding a video sequence with the library-based video coding method generates a library layer bitstream containing the coded library picture and a video layer bitstream (referred to as main bitstream in the following context) containing the coded video sequence picture. The mentioned two kinds of bitstreams is similar as the base layer bitstream and the enhancement layer bitstream in SVC (Scalable Video Coding), i.e. the video layer bitstream depends on the library layer bitstream. However, the management of the two bitstream generated by the library-based video coding method is different from the layered bitstream generated by SVC. The difference is that the layered bitstreams in SVC are synchronized based on a same timeline, while the two bitstreams in library-based video coding are not synchronized based on the same timeline but are synchronized based on explicitly signaling.

When encoding or decoding video by using the conventional video coding methods, a decoded picture buffer is needed to store the short-term reference picture, which is composed by the reconstructed picture having been encoded or decoded before the current picture, and the current coding picture as well as the picture to be present. The minimal size of the decoded picture buffer required for encoding or decoding the bitstream of the compressed video is also signaled in the bitstream. According to the minimal size, decoder provides a decoded picture buffer that satisfies the required minimal size, and processes management operations to move in or remove out pictures in the decoded picture buffer which ensures the correct and real time decoding.

But as for the bitstream encoded by using the library-based video coding method, the encoding or decoding of the picture in the main bitstream requires the library picture provided from the outside of the decoder to serve as reference picture. The management mechanism of the decoded picture buffer of the conventional coding method could not efficiently store and mange the library pictures provided from the outside.

The following publications discloses coding/decoding methods according to prior art:
- YU HUALONG ET AL, "Improved DASH for Cross-Random-Access Prediction Structure in Video Coding", 2018 IEEE INTERNATIONAL SYMPOSIUM ON CIRCUITS AND SYSTEMS (ISCAS), IEEE, (20180527);
- ZUO XUGUANG ET AL, "Library based coding for videos with repeated scenes", 2015 PICTURE CODING SYMPOSIUM (PCS), IEEE, (20150603);
- XUGUANG ZUO ET AL, "Scene-library-based video coding scheme exploiting long-term temporal correlation", JOURNAL OF ELECTRONIC IMAGING, US, (20170830), vol. 26, no. 04.

### DETAILED DESCRIPTION OF THE PRESENT INVENTION

To overcome the mentioned problems of the conventional methods, this invention discloses methods and apparatus of video coding. The invention is defined by the appended claims.

The first aspect of the present invention provides a method of video coding according to claim 1.

Furthermore, the operation of updating decoded picture buffer further comprising:
If the library picture with index 'Lib _index' does not exist in the decoded picture buffer, the decoder of the main bitstream providing the index 'Lib_index' of the library picture referenced by the current picture to the outside of the decoder and obtaining the library picture corresponding to the index 'Lib_index' from the outside;
Moving the library picture to the decoded picture buffer;
Marking the picture as library picture and the its index as 'Lib_index'.

The present method further comprising one of the followings:
(1) Decoding the size information of the library picture buffer to obtain that the size of the library picture buffer in the decoded picture buffer is NL in picture unit;
(2) Setting the size of the library picture buffer in the decoded picture buffer as a pre-determined and fixed number NL;
(3) Decoding the size information of the decoded picture buffer from the main bitstream to obtain that the size of the decoded picture buffer is NP in picture unit, or setting the size of the decoded picture buffer as a pre-determined and fixed number NP; According to that there are ND non-library pictures in the decoded picture buffer, obtaining that the size of the library picture buffer in the decoded picture buffer is NL in picture unit, wherein NL=NP-ND.

The present method, wherein the operation of updating the decoded picture buffer further comprising:
(1) If the number of the library picture in the decoded picture buffer is smaller than the size NL of the library picture buffer, moving the library picture corresponding to the index 'Lib_index' to the decoded picture buffer, and marking the picture as library picture and the its index as 'Lib_index';
(2) If the number of the library picture in the decoded picture buffer is equal to the size NL of the library picture buffer, removing one or more library pictures from the decoded picture buffer according to a buffer management principle, moving the library picture corresponding to the index 'Lib_index' to the decoded picture buffer, and marking the picture as library picture and the its index as 'Lib_index';

The present method further comprising:
Decoding the size information of the decoded picture buffer from the main bitstream to obtain that the size of the decoded picture buffer is NP in picture unit, or setting the size of the decoded picture buffer as a pre-determined and fixed number NP;

Updating the decoded picture buffer, wherein the operation contains one of the followings:
(1) If the number of the picture in the decoded picture buffer is smaller than the size NP of the decoded picture buffer, moving the current decoded picture into the decoded picture buffer;
(2) If the number of the picture in the decoded picture buffer is equal to the size NP of the decoded picture buffer, removing one or more library pictures already in the decoded picture buffer according to a buffer management principle, and moving the current decoded picture into the decoded picture buffer;

The present method further comprising:
(1) The said operation of updating the decoded picture buffer comprising: the decoder of the main bitstream providing the index 'Lib_index' of the library picture referenced by the current picture to the outside of the decoder, obtaining the library picture corresponding to the index 'Lib_index' from the outside, moving the library picture to the decoded picture buffer, and marking the picture as library picture and the its index as 'Lib_index';
(2) Removing all library pictures out from the decoded picture buffer after decoding the current picture.

The present method, wherein the operation of removing one or more library pictures already in the decoded picture buffer according to a buffer management principle comprising one of the followings:
(1) Recording the time instant of each library picture in the decoded picture buffer when it is moved into the buffer, and removing one or more library pictures already in the decoded picture buffer according to the 'First-In-First-Out' principle which means that at least one library picture which is first moved into the decoded picture buffer is removed;
(2) Recording the usage times of each library picture in the decoded picture buffer, and removing one or more library pictures already in the decoded picture buffer according to the 'Least-Frequently-Used' principle which means that at least one library picture which is used by the least times is removed;
(3) Recording the usage time instant of each library picture in the decoded picture buffer, and removing one or more library pictures already in the decoded picture buffer according to the 'Least-Recently-Used' principle which means that at least one library picture whose latest usage time instant is the farthest from the decoding time instant of the current picture is removed.

The present method, wherein the operation of updating the decoded picture buffer further comprising:
When the size NL of the library picture buffer in the decoded picture buffer is equal to 1, if the index 'Lib_index' of the library picture referenced by the current picture is different from the index of the library picture stored in the decoded picture buffer, removing all library pictures stored in the decoded picture buffer, the decoder of the main bitstream providing the index 'Lib_index' of the library picture referenced by the current picture to the outside of the decoder, obtaining the library picture corresponding to the index 'Lib_index' from the outside, moving the library picture to the decoded picture buffer, and marking the picture as library picture and the its index as 'Lib_index'.

The second aspect of the present invention provides a video encoding method according to claim 9.

The third aspect of the present invention provides an apparatus of video according to claim 10.

The present invention provides methods and apparatus of video coding, which realizes that the encoder or decoder of the main bitstream can store the library picture provided from the outside for a long time in the decoded picture buffer when encoding or decoding the picture in the main bitstream, and also makes it efficiently to store and manage the short-term reference picture that is referenced by the current encoding or decoding picture. With the above methods and apparatus, it can be avoided that the total number of the library picture and short-term reference picture exceeds the size of the decoded picture buffer, which ensures the availability of the reference picture and the validity of encoding or decoding. Meanwhile, the above methods and apparatus ensure that the decoded picture buffer can efficiently manage and store the library picture, which avoids frequently move in and out of the library picture, reduces the extra load of decoding brought by the library picture at the encoder or decoder, and reduces the extra load of data bandwidth consumed by moving the library picture between the encoder/decoder and the outside. The above benefits ensure the real-time decoding of the bitstream at the decoder of the main bitstream.

When the size of the decoded picture buffer in the decoder of the main bitstream is restricted, the library picture can be stored in the external buffer expanded at the outside of the main bitstream decoder. The size of the external buffer can be changed flexibly according to the memory capacity at the receiver side. When there does exist an external buffer, it can significantly reduce the bandwidth of requesting data from the sever side or the data source. Although the number of library picture in the decoded picture buffer of the main bitstream decoder is restricted, the outside of the main bitstream decoder can provide an external buffer to store the library picture, where the size of the external buffer is determined by the capacity of the receiver. Finally, different coding gains can be achieved by using different size of external buffer.

### BRIEF DESCRIPTION OF THE DRAWINGS

In order to clearly explain the invention, drawings are briefly introduced.
Figure 1 Example of the dependency relation between the pictures in the main bitstream and those in the library bitstream.
Figure 2 Example of the structure of the apparatus provided by this invention for video decoding.
Figure 3 Example of the structure of another apparatus provided by this invention for video decoding.
Figure 4 Example of the structure of the apparatus provided by this invention for video encoding.

### DETAILED Examples

### Example 1

A video decoding method is composed of the following operations:
1. Obtaining the index of the library picture referenced by a current coding picture according to the reference picture configuration information of the current coding picture.
   In one example, the said reference picture configuration information is signaled in the sequence header or picture header or slice header or sequence parameter set, and the said reference picture configuration information contains a flag to signal whether the picture referenced by the current coding picture is a library picture and the index of the reference picture, wherein, if the reference picture is a library picture, the index of the library picture is used to locate the corresponding library picture from the outside of the decoder.
   In one example, the current coding picture references to one or more library pictures.
2. Locating the corresponding library picture according to the said index of the library picture and, if the library picture corresponding to the said index does not exist in the decoded picture buffer, obtaining the library picture corresponding to the said index, and process the operation 3.
3. Updating the picture stored in the decoded picture buffer, wherein the operation comprises one of the following operations:
   1) When the number of the library picture in the decoded picture buffer is smaller than the minimal buffer size of the library picture, moving the library picture corresponding to the said index into the decoded picture buffer.
      In one example, the library picture moved into the decoded picture buffer is marked with a flag which is used to distinguish the library picture and the non-library picture in the decoded picture buffer. In one example, the decoded picture buffer is divided into two parts, of which one part stores the library picture only and another the non-library picture. In one example, the library picture is stored at the end of the decoded picture buffer. In one example, the library picture moved into the decoded picture buffer is assigned with an index which is used to distinguish the library picture and the non-library picture in the decoded picture buffer.
   2) When the number of the library picture in the decoded picture buffer is no less than the minimal buffer size of the library picture, removing one or more library pictures from the decoded picture buffer according to a buffer management principle and moving the library picture corresponding to the said index into the decoded picture buffer.

The said minimal buffer size of the library picture describes the minimal size of the buffer provided by the decoded picture buffer for storing the library picture. In one example, the buffer size is measured in picture unit or byte unit. In one example, the information of the said minimal buffer size of the library picture is signaled in the sequence header or picture header or slice header or sequence parameter set, and the decoder parses the bitstream to obtain the said minimal buffer size of the library picture. In one example, the said minimal buffer size of the library picture is restricted in a video coding standard, e.g. restricted by the profile and level which describe the decoding capacity. Then the decoding method uses the minimal buffer size of the library picture that is restricted by the standard.

In one example, the said buffer management principle to remove the library picture includes but not limited to the following methods:
Recording the time instant of each library picture in the decoded picture buffer when it is moved into the buffer, and removing one or more library pictures already in the decoded picture buffer according to the 'First-In-First-Out' principle which means that at least one library picture which is first moved into the decoded picture buffer is removed; Or
Recording the usage times of each library picture in the decoded picture buffer, and removing one or more library pictures already in the decoded picture buffer according to the 'Least-Frequently-Used' principle which means that at least one library picture which is used by the least times is removed; Or
Recording the usage time instant of each library picture in the decoded picture buffer, and removing one or more library pictures already in the decoded picture buffer according to the 'Least-Recently-Used' principle which means that at least one library picture whose latest usage time instant is the farthest from the decoding time instant of the current picture is removed.

In one example, when the buffer size NL of the library picture is equal to 1, the principle of 'remove immediately' is used, which means that the library picture already in the decoded picture buffer is removed once the index of the library picture referenced by the current picture is different from the index of the library picture stored in the decoded picture buffer.

3) Adding the library picture to the reference picture list of the current picture, wherein the library picture is located in the decoded picture buffer with the said index, and decoding the current picture by using the reference picture in the reference picture list.

### Example 2

A video decoding method is composed of the following operations:
1. Decoding the size information of the library picture buffer from a main bitstream to obtain that the size of the library picture buffer in the decoded picture buffer is NL in picture unit, wherein, in one example, the size information can be signaled as the actual size of the library picture buffer, or the actual size of the library picture buffer minus 1, or the profile that describes the actual size of the library picture buffer and so on. According to the said size information of the library picture buffer, a library picture buffer inside the decoded picture buffer of the main bitstream decoder is used to store the library picture, wherein the size of the library picture buffer is no less than the size NL of the library picture buffer signaled in the main bitstream.
2. Decoding a current picture in the main bitstream, which comprises:
   1) Decoding the reference information of the current picture of the main bitstream to obtain the information that the reference picture of the current picture contains library picture and the index 'Lib_index' of the library picture referenced by the current picture, wherein, in one example, the said reference information can be information recorded in the reference picture list;
   2) Updating the decoded picture buffer, according to the said index 'Lib_index' of the library picture; If the library picture with index 'Lib_index' does not exist in the decoded picture buffer, the decoder of the main bitstream providing the index 'Lib_index' of the library picture referenced by the current picture to the outside of the decoder, obtaining the library picture corresponding to the index 'Lib_index' from the outside, and updating the library picture in the decoded picture buffer, wherein the updating operation comprising:
      a) If the number of the library picture in the decoded picture buffer is smaller than the size NL of the library picture buffer, moving the library picture corresponding the said index 'Lib_index' into the decoded picture buffer, and marking the picture as library picture and the its index as 'Lib_index';
      b) If the number of the library picture in the decoded picture buffer is equal to the size NL of the library picture buffer, removing one or more library pictures from the decoded picture buffer according to a buffer management principle, moving the library picture corresponding the said index 'Lib_index' into the decoded picture buffer, and marking the picture as library picture and the its index as 'Lib_index'. The said buffer management principle can be one of the following methods:
         i. Recording the time instant of each library picture in the decoded picture buffer when it is moved into the buffer, and removing one or more library pictures already in the decoded picture buffer according to the 'First-In-First-Out' principle which means that at least one library picture which is first moved into the decoded picture buffer is removed; Or
         ii. Recording the usage times of each library picture in the decoded picture buffer, and removing one or more library pictures already in the decoded picture buffer according to the 'Least-Frequently-Used' principle which means that at least one library picture which is used by the least times is removed; Or
         iii. Recording the usage time instant of each library picture in the decoded picture buffer, and removing one or more library pictures already in the decoded picture buffer according to the 'Least-Recently-Used' principle which means that at least one library picture whose latest usage time instant is the farthest from the decoding time instant of the current picture is removed.
      In one example, when the buffer size NL of the library picture is equal to 1, the principle of 'remove immediately' is used, which means that the library picture already in the decoded picture buffer is removed once the index of the library picture referenced by the current picture is different from the index of the library picture stored in the decoded picture buffer. There can be other principles and the corresponding updating method other than the ones mentioned above.
   3) Locating the library picture corresponding to the index 'Lib_index' in the reference picture from the decoded picture buffer according to the reference information of the current picture, and obtaining the library picture corresponding to the index 'Lib_index' from the decoded picture buffer.
   4) Decoding the current picture by using the reference picture containing the library picture in the decoded picture buffer, wherein the library picture corresponds to the said index 'Lib_index' and the reference picture of the current decoding picture contains one or more library picture and may contain the non-library picture.

### Example 3 (wherein the size of the library picture buffer is restricted implicitly)

A video decoding method is composed of the following operations:
1. Setting the size of the library picture buffer in the decoded picture buffer as a fixed number NL in picture unit according to the pre-determined principle of the main bitstream decoder.
2. Decoding a current picture in the main bitstream, which comprises:
   1) Decoding the reference information of the current picture of the main bitstream to obtain the information that the reference picture of the current picture contains library picture and the index 'Lib_index' of the library picture referenced by the current picture, wherein, in one example, the said reference information can be information recorded in the reference picture list;
   2) Updating the decoded picture buffer, according to the said index 'Lib_index' of the library picture; If the library picture with index 'Lib_index' does not exist in the decoded picture buffer, the decoder of the main bitstream providing the index 'Lib_index' of the library picture referenced by the current picture to the outside of the decoder, obtaining the library picture corresponding to the index 'Lib_index' from the outside, and updating the library picture in the decoded picture buffer, wherein the updating operation comprising:
      a) If the number of the library picture in the decoded picture buffer is smaller than the size NL of the library picture buffer, moving the library picture corresponding the said index 'Lib_index' into the decoded picture buffer, and marking the picture as library picture and the its index as 'Lib_index';
      b) If the number of the library picture in the decoded picture buffer is equal to the size NL of the library picture buffer, removing one or more library pictures from the decoded picture buffer according to a buffer management principle, moving the library picture corresponding the said index 'Lib_index' into the decoded picture buffer, and marking the picture as library picture and the its index as 'Lib_index'. The said buffer management principle can be one of the following methods:
         i. Recording the time instant of each library picture in the decoded picture buffer when it is moved into the buffer, and removing one or more library pictures already in the decoded picture buffer according to the 'First-In-First-Out' principle which means that at least one library picture which is first moved into the decoded picture buffer is removed; Or
         ii. Recording the usage times of each library picture in the decoded picture buffer, and removing one or more library pictures already in the decoded picture buffer according to the 'Least-Frequently-Used' principle which means that at least one library picture which is used by the least times is removed; Or
         iii. Recording the usage time instant of each library picture in the decoded picture buffer, and removing one or more library pictures already in the decoded picture buffer according to the 'Least-Recently-Used' principle which means that at least one library picture whose latest usage time instant is the farthest from the decoding time instant of the current picture is removed.
         iv. In one example, when the buffer size NL of the library picture is equal to 1, the principle of 'remove immediately' is used, which means that the library picture already in the decoded picture buffer is removed once the index of the library picture referenced by the current picture is different from the index of the library picture stored in the decoded picture buffer.
         v. There can be other principles and the corresponding updating method other than the ones mentioned above.
   3) Locating the library picture corresponding to the index 'Lib_index' in the reference picture from the decoded picture buffer according to the reference information of the current picture, and obtaining the library picture corresponding to the index 'Lib_index' from the decoded picture buffer.
   4) Decoding the current picture by using the reference picture containing the library picture in the decoded picture buffer, wherein the library picture corresponds to the said index 'Lib_index' and the reference picture of the current decoding picture contains one or more library picture and may contain the non-library picture.

### Example 4 (wherein the total size of the decoded picture buffer, instead of the size of the library picture buffer, is restricted)

A video decoding method is composed of the following operations:
1. Decoding the size information of the decoded picture buffer from the main bitstream to obtain that the size of the decoded picture buffer is NP in picture unit, or setting the size of the decoded picture buffer as a pre-determined and fixed number NP, wherein the decoded picture buffer in the main bitstream decoder contains the current decoding picture, the picture to be present and the reference picture including the library picture that is used as reference.
2. Decoding the current picture in the main bitstream, including:
   1) Moving the current picture into the decoded picture buffer and updating the picture in the decoded picture buffer, wherein the updating process comprising:
      a) If the number of the picture in the decoded picture buffer is smaller than the size NP of the decoded picture buffer, moving the current picture into the decoded picture buffer;
      b) If the number of the picture in the decoded picture buffer is equal to the size NP of the library picture buffer, removing one or more library pictures from the decoded picture buffer according to a buffer management principle, moving the current picture into the decoded picture buffer. The said buffer management principle can be one of the following methods:
         i. Recording the time instant of each library picture in the decoded picture buffer when it is moved into the buffer, and removing one or more library pictures already in the decoded picture buffer according to the 'First-In-First-Out' principle which means that at least one library picture which is first moved into the decoded picture buffer is removed; Or
         ii. Recording the usage times of each library picture in the decoded picture buffer, and removing one or more library pictures already in the decoded picture buffer according to the 'Least-Frequently-Used' principle which means that at least one library picture which is used by the least times is removed; Or
         iii. Recording the usage time instant of each library picture in the decoded picture buffer, and removing one or more library pictures already in the decoded picture buffer according to the 'Least-Recently-Used' principle which means that at least one library picture whose latest usage time instant is the farthest from the decoding time instant of the current picture is removed.
         iv. In one example, when the buffer size NL of the library picture is equal to 1, the principle of 'remove immediately' is used, which means that the library picture already in the decoded picture buffer is removed once the index of the library picture referenced by the current picture is different from the index of the library picture stored in the decoded picture buffer.
         v. There can be other principles and the corresponding updating method other than the ones mentioned above.
   2) Decoding the reference information of the current picture of the main bitstream to obtain the information that the reference picture of the current picture contains library picture and the index 'Lib_index' of the library picture referenced by the current picture, wherein, in one example, the said reference information can be information recorded in the reference picture list.
   3) Updating the decoded picture buffer, according to the said index 'Lib_index' of the library picture; If the library picture with index 'Lib_index' does not exist in the decoded picture buffer, the decoder of the main bitstream providing the index 'Lib_index' of the library picture referenced by the current picture to the outside of the decoder, obtaining the library picture corresponding to the index 'Lib_index' from the outside, and updating the library picture in the decoded picture buffer, wherein the updating operation comprising:
      a) Obtaining the number of the non-library picture in the decoded picture buffer, referred to as ND;
      b) According to that there are ND non-library pictures in the decoded picture buffer, obtaining that the size of the library picture buffer in the decoded picture buffer is NL in picture unit, wherein NL=NP-ND;
      c) If the number of the library picture in the decoded picture buffer is smaller than the size NL of the library picture buffer, moving the library picture corresponding the said index 'Lib_index' into the decoded picture buffer, and marking the picture as library picture and the its index as 'Lib_index';
      d) If the number of the library picture in the decoded picture buffer is equal to the size NL of the library picture buffer, removing one or more library pictures from the decoded picture buffer according to a buffer management principle, moving the library picture corresponding the said index 'Lib_index' into the decoded picture buffer, and marking the picture as library picture and the its index as 'Lib_index'. The said buffer management principle can be one of the following methods:
         i. Recording the time instant of each library picture in the decoded picture buffer when it is moved into the buffer, and removing one or more library pictures already in the decoded picture buffer according to the 'First-In-First-Out' principle which means that at least one library picture which is first moved into the decoded picture buffer is removed; Or
         ii. Recording the usage times of each library picture in the decoded picture buffer, and removing one or more library pictures already in the decoded picture buffer according to the 'Least-Frequently-Used' principle which means that at least one library picture which is used by the least times is removed; Or
         iii. Recording the usage time instant of each library picture in the decoded picture buffer, and removing one or more library pictures already in the decoded picture buffer according to the 'Least-Recently-Used' principle which means that at least one library picture whose latest usage time instant is the farthest from the decoding time instant of the current picture is removed.
         iv. In one example, when the buffer size NL of the library picture is equal to 1, the principle of 'remove immediately' is used, which means that the library picture already in the decoded picture buffer is removed once the index of the library picture referenced by the current picture is different from the index of the library picture stored in the decoded picture buffer.
         v. There can be other principles and the corresponding updating method other than the above mentioned ones.
      Although the size of the decoded picture buffer in the decoder of the main bitstream is restricted, the library picture can be stored in the external buffer expanded at the outside of the main bitstream decoder. The size of the external buffer can be changed flexibly according to the memory capacity at the receiver side. When there does exist an external buffer, it can significantly reduce the bandwidth of requesting data from the sever side or the data source. Although the number of library picture in the decoded picture buffer of the main bitstream decoder is restricted, the outside of the main bitstream decoder can provide an external buffer to store the library picture, where the size of the external buffer is determined by the capacity of the receiver. Finally, different coding gains can be achieved by using different size of external buffer.
   4) Locating the library picture corresponding to the index 'Lib_index' in the reference picture from the decoded picture buffer according to the reference information of the current picture, and obtaining the library picture corresponding to the index 'Lib_index' from the decoded picture buffer.
   5) Decoding the current picture by using the reference picture containing the library picture in the decoded picture buffer, wherein the library picture corresponds to the said index 'Lib_index' and the reference picture of the current decoding picture contains one or more library picture and may contain the non-library picture.

### Example 5

A video decoding method is composed of the following operations:
1. Decoding the size information of the decoded picture buffer from the main bitstream to obtain that the size of the decoded picture buffer is NP in picture unit, or setting the size of the decoded picture buffer as a pre-determined and fixed number NP, wherein the decoded picture buffer in the main bitstream decoder contains the current decoding picture, the picture to be present and the reference picture including the library picture that is used as reference, and wherein the total number of all the pictures cannot exceed the size NP of the decoded picture buffer.
2. Decoding a current picture in the main bitstream, which comprises:
   1) Decoding the reference information of the current picture of the main bitstream to obtain the information that the reference picture of the current picture contains library picture and the index 'Lib_index' of the library picture referenced by the current picture, wherein, in one example, the said reference information can be information recorded in the reference picture list;
   2) The decoder of the main bitstream providing the index 'Lib_index' of the library picture referenced by the current picture to the outside of the decoder, obtaining the library picture corresponding to the index 'Lib_index' from the outside, moving the library picture to the decoded picture buffer, and marking the picture as library picture and the its index as 'Lib_index';
   3) Locating the library picture corresponding to the index 'Lib_index' in the reference picture from the decoded picture buffer according to the reference information of the current picture, and obtaining the library picture corresponding to the index 'Lib_index' from the decoded picture buffer.
   4) Decoding the current picture by using the reference picture containing the library picture in the decoded picture buffer, wherein the library picture corresponds to the said index 'Lib_index' and the reference picture of the current decoding picture contains one or more library picture and may contain the non-library picture.
   5) Removing all library pictures out from the decoded picture buffer after decoding the current picture.

### Example 6

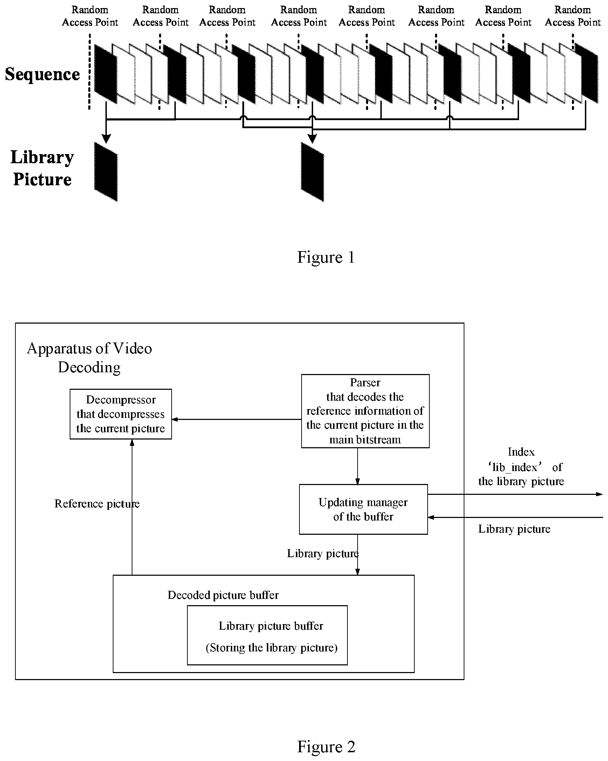

As shown in the Fig. 2, an apparatus of video decoding is composed of the following components:
1. A parser that decodes the reference information of the current picture of the main bitstream, wherein the parser decodes the main bitstream to obtain the information of whether the current picture references to library picture and the index 'Lib_index' of the library picture referenced by the current picture.
   In one example, the parser obtains the said reference information, i.e. reference picture configuration information, from the sequence header or picture header or slice header or sequence parameter set.
2. A decoded picture buffer that stores the reference picture needed to decode the current picture, wherein the said decoded picture buffer can also store the picture other than the reference picture that is needed to decode the current picture.
   In one example, the buffer also contains a marker, which marks the library picture moved into the decoded picture buffer with a flag that is used to distinguish the library picture and the non-library picture in the decoded picture buffer. In one example, the decoded picture buffer divides into two parts, of which one part stores the library picture only and another the non-library picture. In one example, the library picture is stored at the end of the decoded picture buffer. In one example, the buffer also contains an indexing module, which assigns the library picture moved into the decoded picture buffer with an index that is used to distinguish the library picture and the non-library picture in the decoded picture buffer.
3. An updating manager of the decoded picture buffer, wherein the manager updates the picture in the said decoded picture buffer according to the index 'Lib_index' of the library picture, wherein the index is provided by the said parser, and wherein the said manager obtains the library picture corresponding to the index 'Lib_index' that is not in the decoded picture buffer inside the decoder from the outside of the decoder by means of outputting the index 'Lib_index' of the library picture to the outside of the decoder, and selects a library picture already in the said buffer, based on the auxiliary information of the stored library picture (e.g. the time instant when the library picture is moved into the buffer, or the usage times of the library picture or the time instant when the library picture is used as reference), to remove it from the decoded picture buffer and then move in the library picture that is obtained from the outside of the decoder and corresponds to the index 'Lib_index'.
   In one example, the said updating manager further contains a recorder that is used to provide recorded information for the manage principle of removing the library picture from the decoded picture buffer, wherein the operation of the recorder includes but not limited to the followings:
   i. The recorder records the time instant of each library picture in the decoded picture buffer when it is moved into the buffer, based on which the said updating manager removes one or more library pictures already in the decoded picture buffer according to the 'First-In-First-Out' principle which means that at least one library picture which is first moved into the decoded picture buffer is removed.
   ii. The recorder records the usage times of each library picture in the decoded picture buffer, based on which the said updating manager removes one or more library pictures already in the decoded picture buffer according to the 'Least-Frequently-Used' principle which means that at least one library picture which is used by the least times is removed; Or
   iii. The recorder records the usage time instant of each library picture in the decoded picture buffer, based on which the said updating manager removes one or more library pictures already in the decoded picture buffer according to the 'Least-Recently-Used' principle which means that at least one library picture whose latest usage time instant is the farthest from the decoding time instant of the current picture is removed.
   iv. In one example, when the buffer size NL of the library picture is equal to 1, the principle of 'remove immediately' is used by the said updating manager, which means that the library picture already in the decoded picture buffer is removed once the index of the library picture referenced by the current picture is different from the index of the library picture stored in the decoded picture buffer.
4. A decompressor that decompresses the current picture, wherein the decompressor obtains the reconstructed picture of the current picture by referencing to the library picture stored in the decoded picture buffer, and wherein the said decompressor obtains the reference picture including the library picture from the decoded picture buffer by using the said reference information, provided by the said parser, which contains the information of whether the current picture references to library picture and the index 'Lib_index' of the library picture referenced by the current picture, and obtains the reconstructed picture of the current picture by referencing to the said reference picture.
5. A port that outputs the index 'Lib_index' of the library picture to the outside and another port that imports the library picture corresponding to the index 'Lib_index'.

### Example 7

As shown in Fig. 5, an apparatus of video decoding is composed of the following components:
1. A parser that decodes the reference information of the current picture of the main bitstream, wherein the parser decodes the main bitstream to obtain the information of whether the current picture references to library picture and the index 'Lib_index' of the library picture referenced by the current picture.
2. A decoded picture buffer that stores the reference picture needed to decode the current picture, wherein the said decoded picture buffer can also store the picture other than the reference picture that is needed to decode the current picture.
3. An updating manager of the decoded picture buffer, wherein the manager updates the picture in the said decoded picture buffer according to the index 'Lib_index' of the library picture, wherein the index is provided by the said parser. While in the updating process, if the library picture corresponding to the index 'Lib_index' does not exist in the decoded picture buffer in the decoder, the said updating manager transmits the index 'Lib_index' of the library picture out to the library picture buffer manager in the system layer, and, if the external library picture buffer in the system layer does not contain the library picture corresponding to the index 'Lib_index', the library picture buffer manager in the system layer sends request to the server to obtain the library picture corresponding to the index 'Lib_index'. Then the obtained library picture is sent to the updating manager of the decoded picture buffer. The said manager selects a library picture already in the said buffer, based on the auxiliary information of the stored library picture (e.g. the time instant when the library picture is moved into the buffer, or the usage times of the library picture or the time instant when the library picture is used as reference), to remove it from the decoded picture buffer and then move in the library picture that is obtained from the outside of the decoder and corresponds to the index 'Lib_index'.
   Although the size of the decoded picture buffer in the decoder of the main bitstream is restricted, the library picture can be stored in the external buffer expanded at the outside of the main bitstream decoder. The size of the external buffer can be changed flexibly according to the memory capacity at the receiver side. When there does exist an external buffer, it can significantly reduce the bandwidth of requesting data from the sever side or the data source. Although the number of library picture in the decoded picture buffer of the main bitstream decoder is restricted, the outside of the main bitstream decoder can provide an external buffer to store the library picture, where the size of the external buffer is determined by the capacity of the receiver. Finally, different coding gains can be achieved by using different size of external buffer.
4. A decompressor that decompresses the current picture, wherein the decompressor obtains the reconstructed picture of the current picture by referencing to the library picture stored in the decoded picture buffer, and wherein the said decompressor obtains the reference picture including the library picture from the decoded picture buffer by using the said reference information, provided by the said parser, which contains the information of whether the current picture references to library picture and the index 'Lib_index' of the library picture referenced by the current picture, and obtains the reconstructed picture of the current picture by referencing to the said reference picture.
5. A port that outputs the index 'Lib_index' of the library picture to the outside and another port that imports the library picture corresponding to the index 'Lib_index'.

### Example 8

A method of video encoding is composed of the following operations:
1. Obtaining the index of the library picture referenced by the current picture.
   In one example, according to the similarity between the contents in picture, the library picture whose content is the most similar with the current picture is selected as the reference picture of the current picture. In one example, according to the temporal continuity, the library picture which is extracted at the time instant nearest to the time instant of the current picture is selected as the reference picture of the current picture. In one example, there is only one available library picture and this library picture is selected as the reference picture of the current picture. The said index of the library picture is used to locate the corresponding library picture from the outside of the decoder. In one example, the current picture references to one or more library pictures.
2. Locating the corresponding library picture according to the said index of the library picture and, if the library picture corresponding to the said index does not exist in the decoded picture buffer, obtaining the library picture corresponding to the said index, and process the operation 3.
3. Updating the picture stored in the decoded picture buffer, wherein the operation comprises one of the following operations:
   1) When the number of the library picture in the decoded picture buffer is smaller than the minimal buffer size of the library picture, moving the library picture corresponding to the said index into the decoded picture buffer.
      In one example, the library picture moved into the decoded picture buffer is marked with a flag which is used to distinguish the library picture and the non-library picture in the decoded picture buffer. In one example, the decoded picture buffer is divided into two parts, of which one part stores the library picture only and another the non-library picture. In one example, the library picture is stored at the end of the decoded picture buffer. In one example, the library picture moved into the decoded picture buffer is assigned with an index which is used to distinguish the library picture and the non-library picture in the decoded picture buffer.
   2) When the number of the library picture in the decoded picture buffer is no less than the minimal buffer size of the library picture, removing one or more library pictures from the decoded picture buffer according to a buffer management principle and moving the library picture corresponding to the said index into the decoded picture buffer.

The said minimal buffer size of the library picture describes the minimal size of the buffer provided by the decoded picture buffer for storing the library picture. In one example, the buffer size is measured in picture unit or byte unit. In one example, the information of the said minimal buffer size of the library picture is encoded into the bitstream and signaled in the sequence header or picture header or slice header or sequence parameter set. In one example, the said minimal buffer size of the library picture is restricted in a video coding standard, e.g. restricted by the profile and level which describe the decoding capacity. Then the encoding method uses the minimal buffer size of the library picture that is restricted by the standard.

In one example, the said buffer management principle to remove the library picture includes but not limited to the following methods:
Recording the time instant of each library picture in the decoded picture buffer when it is moved into the buffer, and removing one or more library pictures already in the decoded picture buffer according to the 'First-In-First-Out' principle which means that at least one library picture which is first moved into the decoded picture buffer is removed; Or
Recording the usage times of each library picture in the decoded picture buffer, and removing one or more library pictures already in the decoded picture buffer according to the 'Least-Frequently-Used' principle which means that at least one library picture which is used by the least times is removed; Or
Recording the usage time instant of each library picture in the decoded picture buffer, and removing one or more library pictures already in the decoded picture buffer according to the 'Least-Recently-Used' principle which means that at least one library picture whose latest usage time instant is the farthest from the decoding time instant of the current picture is removed.

In one example, when the buffer size NL of the library picture is equal to 1, the principle of 'remove immediately' is used, which means that the library picture already in the decoded picture buffer is removed once the index of the library picture referenced by the current picture is different from the index of the library picture stored in the decoded picture buffer.

3) Adding the library picture to the reference picture list of the current picture, wherein the library picture is located in the decoded picture buffer with the said index, and encoding the current picture by using the reference picture in the reference picture list.

### Example 9

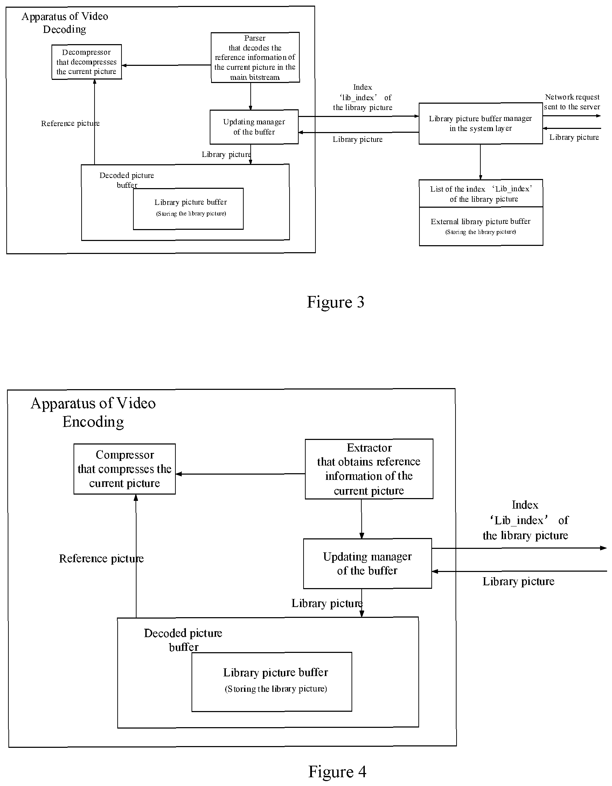

As shown in Fig. 4, an apparatus of video encoding is composed of the following components:
1. An extractor that obtains the reference information of the current picture, wherein the said extractor outputs the information of whether the current picture references to library picture and the index 'Lib_index' of the library picture referenced by the current picture.
   In one example, the extractor further includes a selector which, according to the similarity between the contents in picture, selects the library picture whose content is the most similar with the current picture to server as the reference picture of the current picture. In one example, the extractor further includes a selector which, according to the temporal continuity, selects the library picture which is extracted at the time instant nearest to the time instant of the current picture to server as the reference picture of the current picture. In one example, there is only one available library picture and the said extractor selects this library picture to serve as the reference picture of the current picture.
2. A decoded picture buffer that stores the reference picture needed to decode the current picture.
   In one example, the buffer also contains a marker, which marks the library picture moved into the decoded picture buffer with a flag that is used to distinguish the library picture and the non-library picture in the decoded picture buffer. In one example, the decoded picture buffer divides into two parts, of which one part stores the library picture only and another the non-library picture. In one example, the library picture is stored at the end of the decoded picture buffer. In one example, the buffer also contains an indexing module, which assigns the library picture moved into the decoded picture buffer with an index that is used to distinguish the library picture and the non-library picture in the decoded picture buffer.
3. An updating manager of the decoded picture buffer, wherein the manager updates the picture in the said decoded picture buffer according to the index 'Lib_index' of the library picture, wherein the said manager obtains the library picture corresponding to the index 'Lib_index' that is not in the decoded picture buffer from the outside of the decoded picture buffer by means of outputting the index 'Lib_index' of the library picture to the outside, and selects a library picture already in the said buffer, based on the auxiliary information of the stored library picture (e.g. the time instant when the library picture is moved into the buffer, or the usage times of the library picture or the time instant when the library picture is used as reference), to remove it from the decoded picture buffer and then move in the library picture that is obtained from the outside of the decoder and corresponds to the index 'Lib_index'.
   In one example, the said updating manager further contains a recorder that is used to provide recorded information for the manage principle of removing the library picture from the decoded picture buffer, wherein the operation of the recorder includes but not limited to the followings:
   i. The recorder records the time instant of each library picture in the decoded picture buffer when it is moved into the buffer, based on which the said updating manager removes one or more library pictures already in the decoded picture buffer according to the 'First-In-First-Out' principle which means that at least one library picture which is first moved into the decoded picture buffer is removed.
   ii. The recorder records the usage times of each library picture in the decoded picture buffer, based on which the said updating manager removes one or more library pictures already in the decoded picture buffer according to the 'Least-Frequently-Used' principle which means that at least one library picture which is used by the least times is removed; Or
   iii. The recorder records the usage time instant of each library picture in the decoded picture buffer, based on which the said updating manager removes one or more library pictures already in the decoded picture buffer according to the 'Least-Recently-Used' principle which means that at least one library picture whose latest usage time instant is the farthest from the decoding time instant of the current picture is removed.
   iv. In one example, when the buffer size NL of the library picture is equal to 1, the principle of 'remove immediately' is used by the said updating manager, which means that the library picture already in the decoded picture buffer is removed once the index of the library picture referenced by the current picture is different from the index of the library picture stored in the decoded picture buffer.
4. A compressor that compresses the current picture, wherein the compressor obtains the compressed bitstream of the current picture by referencing to the library picture stored in the decoded picture buffer.
5. A port that outputs the index 'Lib_index' of the library picture to the outside and another port that imports the library picture corresponding to the index 'Lib_index'.

## Claims

1. A video decoding method, which decodes a current picture of a main bitstream, comprising:
(1) Decoding the reference information of the current picture of the main bitstream to obtain the information that the reference picture of the current picture contains a library picture and the index 'Lib _index' of the library picture referenced by the current picture;
(2) If the library picture with index 'Lib_index' does not exist in the decoded picture buffer, the decoder of the main bitstream providing the index 'Lib_index' of the library picture referenced by the current picture to the outside of the decoder, obtaining the library picture corresponding to the index 'Lib_index' from the outside, and updating the library picture in the decoded picture buffer, according to the said index 'Lib_index' of the library picture and the size of the library picture buffer in the decoded picture buffer, wherein the size of the library picture buffer is less than or equal to the size of the decoded picture buffer;
(3) Decoding the current picture by using the reference pictures containing the library picture in the decoded picture buffer, wherein the library picture corresponds to the said index 'Lib_index'.

2. The method according to claim 1, wherein the operation of updating decoded picture buffer further comprising:
If the library picture with index 'Lib_index' does not exist in the decoded picture buffer, the decoder of the main bitstream providing the index 'Lib_index' of the library picture referenced by the current picture to the outside of the decoder and obtaining the library picture corresponding to the index 'Lib_index' from the outside;
Moving the library picture to the decoded picture buffer;
Marking the picture as library picture and its index as 'Lib_index'.

3. The method according to claim 1 further comprising one of the followings:
(1) Decoding the size information of the library picture buffer to obtain that the size of the library picture buffer in the decoded picture buffer is NL in picture unit;
(2) Setting the size of the library picture buffer in the decoded picture buffer as a pre-determined and fixed number NL;
(3) Decoding the size information of the decoded picture buffer from the main bitstream to obtain that the size of the decoded picture buffer is NP in picture unit, or setting the size of the decoded picture buffer as a pre-determined and fixed number NP; According to that there are ND non-library pictures in the decoded picture buffer, obtaining that the size of the library picture buffer in the decoded picture buffer is NL in picture unit, wherein NL=NP-ND.

4. The method according to claim 3, wherein the operation of updating the decoded picture buffer further comprising:
(1) If the number of the library picture in the decoded picture buffer is smaller than the size NL of the library picture buffer, moving the library picture corresponding to the index 'Lib_index' to the decoded picture buffer, and marking the picture as library picture and its index as 'Lib_index';
(2) If the number of the library picture in the decoded picture buffer is equal to the size NL of the library picture buffer, removing one or more library pictures from the decoded picture buffer according to a buffer management principle, moving the library picture corresponding to the index 'Lib_index' to the decoded picture buffer, and marking the picture as library picture and the its index as 'Lib_index';

5. The method according to claim 1 further comprising:
Decoding the size information of the decoded picture buffer from the main bitstream to obtain that the size of the decoded picture buffer is NP in picture unit, or setting the size of the decoded picture buffer as a pre-determined and fixed number NP;
Updating the decoded picture buffer, wherein the operation contains one of the followings:
(1) If the number of the picture in the decoded picture buffer is smaller than the size NP of the decoded picture buffer, moving the current decoded picture into the decoded picture buffer;
(2) If the number of the picture in the decoded picture buffer is equal to the size NP of the decoded picture buffer, removing one or more library pictures already in the decoded picture buffer according to a buffer management principle, and moving the current decoded picture into the decoded picture buffer;

6. The method according to claim 1 further comprising:
(1) The said operation of updating the decoded picture buffer comprising: the decoder of the main bitstream providing the index 'Lib_index' of the library picture referenced by the current picture to the outside of the decoder, obtaining the library picture corresponding to the index 'Lib_index' from the outside, moving the library picture to the decoded picture buffer, and marking the picture as library picture and its index as 'Lib_index';
(2) Removing all library pictures out from the decoded picture buffer after decoding the current picture.

7. The method according to claim 4 and claim 5, wherein the operation of removing one or more library pictures already in the decoded picture buffer according to a buffer management principle comprising one of the followings:
(1) Recording the time instant of each library picture in the decoded picture buffer when it is moved into the buffer, and removing one or more library pictures already in the decoded picture buffer according to the 'First-In-First-Out' principle which means that at least one library picture which is first moved into the decoded picture buffer is removed;
(2) Recording the usage times of each library picture in the decoded picture buffer, and removing one or more library pictures already in the decoded picture buffer according to the 'Least-Frequently-Used' principle which means that at least one library picture which is used by the least times is removed;
(3) Recording the usage time instant of each library picture in the decoded picture buffer, and removing one or more library pictures already in the decoded picture buffer according to the 'Least-Recently-Used' principle which means that at least one library picture whose latest usage time instant is the farthest from the decoding time instant of the current picture is removed.

8. The method according to claim 3, wherein the operation of updating the decoded picture buffer further comprising:
When the size NL of the library picture buffer in the decoded picture buffer is equal to 1, if the index 'Lib_index' of the library picture referenced by the current picture is different from the index of the library picture stored in the decoded picture buffer, removing all library pictures stored in the decoded picture buffer, the decoder of the main bitstream providing the index 'Lib_index' of the library picture referenced by the current picture to the outside of the decoder, obtaining the library picture corresponding to the index 'Lib_index' from the outside, moving the library picture to the decoded picture buffer, and marking the picture as library picture and the its index as 'Lib_index'.

9. A video encoding method of encoding a current picture in a main bitstream, comprising:
(1) Obtaining the index 'Lib_index' of the library picture referenced by the current picture;
(2) If the library picture with index 'Lib_index' does not exist in the decoded picture buffer, the encoder of the main bitstream providing the index 'Lib_index' of the library picture referenced by the current picture to the outside of the encoder, obtaining the library picture corresponding to the index 'Lib_index' from the outside, and updating the library picture in the decoded picture buffer according to the index 'Lib_index' of the library picture and the size of the library picture buffer in the decoded picture buffer, wherein the size of the library picture buffer is less than or equal to the size of the decoded picture buffer;
(3) Encoding the current picture by using the reference pictures containing the library picture in the decoded picture buffer, wherein the library picture corresponds to the said index 'Lib_index'.

10. An apparatus of video decoding , comprising:
A parser that decodes the reference information of a current picture in a main bitstream, wherein the parser outputs the information of whether the current picture references to a library picture and the index 'Lib_index' of the library picture referenced by the current picture;
A decoded picture buffer that stores the reference picture needed to decode the current picture;
An updating manager of the decoded picture buffer in the decoder of the main bitstream, wherein, if the library picture with index 'Lib_index' does not exist in the decoded picture buffer, the manager provides the index 'Lib_index' of the library picture referenced by the current picture to the outside of the decoder, obtains the library picture corresponding to the index 'Lib_index' from the outside, and updates the library picture in the said decoded picture buffer according to the index 'Lib_index' of the library picture and the size of the library picture buffer in the decoded picture buffer, wherein the size of the library picture buffer is less than or equal to the size of the decoded picture buffer;
A decompressor that decompresses the current picture to obtain the reconstructed picture of the current picture by referencing to the library picture stored in the decoded picture buffer;
A port that outputs the index 'Lib_index' of the library picture to the outside and another port that imports the library picture corresponding to the index 'Lib_index'.

## Patentansprüche

1. - Videodecodierungsverfahren, das ein aktuelles Bild eines Hauptbitstreams decodiert, umfassend:
(1) Decodieren der Referenzinformation des aktuellen Bilds des Hauptbitstreams, um die Information zu erhalten, dass das Referenzbild des aktuellen Bilds ein Bibliotheksbild und den Index 'Lib_index' des Bibliotheksbilds, referenziert durch das aktuelle Bild, enthält;
(2) wenn das Bibliotheksbild mit dem Index 'Lib_index' im decodierten Bildpuffer nicht existiert, durch den Decoder des Hauptbitstreams, Bereitstellen des Indexes 'Lib_index' des Bibliotheksbilds, referenziert durch das aktuelle Bild, an die Außenseite des Decoders, Erhalten des Bibliotheksbilds, das dem Index 'Lib_index' entspricht, von der Außenseite und Aktualisieren des Bibliotheksbilds in dem dekodierten Bildpuffer gemäß dem Index 'Lib_index' des Bibliotheksbilds und der Größe des Bibliotheksbildpuffers in dem dekodierten Bildpuffer wobei die Größe des Bibliotheksbildpuffers geringer oder gleich der Größe des dekodierten Bildpuffers ist;
(3) Dekodieren des aktuellen Bilds durch Verwenden der Referenzbilder, die das Bibliotheksbild im dekodierten Bildpuffer enthalten, wobei das Bibliotheksbild dem Index 'Lib_index' entspricht.

2. - Verfahren nach Anspruch 1, wobei der Vorgang des Aktualisierens des dekodierten Bildpuffers weiter Folgendes umfasst:
wenn das Bibliotheksbild mit dem Index 'Lib_index' im decodierten Bildpuffer nicht existiert, durch den Decoder des Hauptbitstreams, Bereitstellen des Indexes 'Lib_index' des Bibliotheksbilds, referenziert durch das aktuelle Bild, an die Außenseite des Decoders und Erhalten des Bibliotheksbilds, das dem Index 'Lib_index' entspricht, von der Außenseite;
Bewegen des Bibliotheksbilds zu dem dekodierten Bildpuffer;
Markieren des Bilds als Bibliotheksbild und seines Indexes als 'Lib_index'.

3. - Verfahren nach Anspruch 1, weiter umfassend eines der Folgenden:
(1) Decodieren der Größeninformation des Bibliotheksbildpuffers, um zu erreichen, dass die Größe des Bibliotheksbildpuffers im dekodierten Bildpuffer NL in der Bildeinheit ist;
(2) Einstellen der Größe des Bibliotheksbildpuffers in dem dekodierten Bildpuffer als eine vorbestimmte und fixierte Nummer NL;
(3) Decodieren der Größeninformation des dekodierten Bildpuffers von dem Hauptbitstream, um zu erreichen, dass die Größe des decodierten Bibliotheksbildpuffers NP in Bildeinheit ist; oder Einstellen der Größe des decodierten Bildpuffers als eine vorbestimmte und fixierte Nummer NP; gemäß dessen, dass ND Nicht-Bibliotheksbilder in dem decodierten Bildpuffer vorhanden sind, Erreichen, dass die Größe des Bibliotheksbildpuffers im dekodierten Bildpuffer NL in Bildeinheit ist, wobei NL = NP - ND.

4. - Verfahren nach Anspruch 3, wobei der Vorgang des Aktualisierens des dekodierten Bildpuffers weiter Folgendes umfasst:
(1) wenn die Nummer des Bibliotheksbilds in dem dekodierten Bildpuffer kleiner als die Größe NL des Bibliotheksbildpuffers ist, Bewegen des Bibliotheksbilds, das dem Index "Lib_index' entspricht, zu dem dekodierten Bildpuffer, und Markieren des Bilds als Bibliotheksbild und seines Indexes als 'Lib_index';
(2) wenn die Nummer des Bibliotheksbilds in dem dekodierten Bildpuffer gleich der Größe NL des Bibliotheksbildpuffers ist, Entfernen eines oder mehrerer Bibliotheksbilder von dem dekodierten Bildpuffer gemäß einem Pufferverwaltungsprinzip, Bewegen des Bibliotheksbilds, das dem Index 'Lib_index' entspricht, zu dem dekodierten Bildpuffer und Markieren des Bilds als Bibliotheksbild und seines Indexes als 'Lib_index'.

5. - Verfahren nach Anspruch 1, weiter umfassend:
Decodieren der Größeninformation des dekodierten Bildpuffers von dem Hauptbitstream, um zu erreichen, dass die Größe des dekodierten Bildpuffers NP in Bildeinheit ist, oder Einstellen der Größe des decodierten Bildpuffers als eine vorbestimmte und fixierte Nummer NP;
Aktualisieren des dekodierten Bildpuffers, wobei der Vorgang eines der Folgenden enthält:
(1) wenn die Nummer des Bilds in dem dekodierten Bildpuffer kleiner als die Größe NP des dekodierten Bildpuffers ist, Bewegen des aktuellen decodierten Bilds in den dekodierten Bildpuffer;
(2) wenn die Nummer des Bilds in dem dekodierten Bildpuffer gleich der Größe NP des dekodierten Bildpuffers ist, Entfernen eines oder mehrerer Bibliotheksbilder, die bereits in dem dekodierten Bildpuffer vorhanden sind, gemäß einem Pufferverwaltungsprinzip, und Bewegen des aktuellen dekodierten Bilds in den dekodierten Bildpuffer.

6. - Verfahren nach Anspruch 1, weiter umfassend:
(1) Der Vorgang des Aktualisierens des dekodierten Bildpuffers umfassend: durch den Decoder des Hauptbitstreams, Bereitstellen des Indexes 'Lib_index' des Bibliotheksbilds, referenziert durch das aktuelle Bild, an die Außenseite des Decoders, Erhalten des Bibliotheksbilds, das dem Index 'Lib_index' entspricht, von der Außenseite, Bewegen des Bibliotheksbilds zu dem dekodierten Bildpuffer und Markieren des Bilds als Bibliotheksbild und seines Indexes als 'Lib_index':
(2) Entfernen aller Bibliotheksbilder von dem dekodierten Bildpuffer nach dem Dekodieren des aktuellen Bilds.

7. - Verfahren nach Anspruch 4 und Anspruch 5, wobei der Vorgang des Entfernens eines oder mehrerer Bibliotheksbilder, die bereits in dem dekodierten Bildpuffer sind vorhanden sind, gemäß einem Pufferverwaltungsprinzip, umfassend eines der Folgenden:
(1) Aufzeichnen des Zeitpunkts jedes Bibliotheksbilds in dem decodierten Bildpuffer, wenn es in den Puffer bewegt wird, und Entfernen eines oder mehrerer Bibliotheksbilder, die bereits in dem dekodierten Bildpuffer vorhanden sind, gemäß dem Prinzip 'First-In-First-Out', was bedeutet, dass mindestens ein Bibliotheksbild, das zuerst in den dekodierten Bildpuffer bewegt wird, entfernt wird;
(2) Aufzeichnen der Benutzungszeiten jedes Bibliotheksbilds in dem dekodierten Bildpuffer, und Entfernen eines oder mehrerer Bibliotheksbilder, die bereits in dem dekodierten Bildpuffer vorhanden sind, gemäß dem Prinzip "am seltensten verwendet", was bedeutet, dass mindestens ein Bibliotheksbild, das am wenigsten oft verwendet wird, entfernt wird;
(3) Aufzeichnen des Benutzungszeitpunkts jedes Bibliotheksbilds in dem decodierten Bildpuffer, und Entfernen eines oder mehrerer Bibliotheksbilder, die bereits in dem dekodierten Bildpuffer vorhanden sind, gemäß dem Prinzip "am wenigsten kürzlich verwendet", was bedeutet, dass mindestens ein Bibliotheksbild, dessen letzter Benutzungszeitpunkt am weitesten von dem Dekodierungszeitpunkt des aktuellen Bilds ist, entfernt wird.

8. - Verfahren nach Anspruch 3, wobei der Vorgang des Aktualisierens des dekodierten Bildpuffers weiter Folgendes umfasst:
wenn die Größe NL des Bibliotheksbildpuffers in dem dekodierten Bildpuffer gleich 1 ist, wenn der Index 'Lib_index' des Bibliotheksbilds, referenziert durch das aktuelle Bild, verschieden von dem Index des Bibliotheksbilds ist, das in dem dekodierten Bildpuffer gespeichert ist, Entfernen aller Bibliotheksbilder, die in dem dekodierten Bildpuffer gespeichert sind, durch den Decoder des Hauptbitstreams, Bereitstellen den Index 'Lib_index' des Bibliotheksbilds, referenziert durch das aktuelle Bild, an die Außenseite des Decoders, Erhalten des Bibliotheksbilds, das dem Index 'Lib_index' entspricht, von der Außenseite, Bewegen des Bibliotheksbilds zu dem dekodierten Bildpuffer und Markieren des Bilds als Bibliotheksbild und seines Indexes als 'Lib_index'.

9. - Videocodierungsverfahren zum Codieren eines aktuellen Bilds in einem Hauptbitstream, umfassend:
(1) Erhalten des Indexes 'Lib_index' des Bibliotheksbilds, referenziert durch das aktuelle Bild;
(2) wenn das Bibliotheksbild mit dem Index 'Lib_index' in dem decodierten Bildpuffer nicht existiert, durch den Decoder des Hauptbitstreams, Bereitstellen des Indexes 'Lib_index' des Bibliotheksbilds, referenziert durch das aktuelle Bild, an die Außenseite des Decoders, Erhalten des Bibliotheksbilds, das dem Index 'Lib_index' entspricht, von der Außenseite und Aktualisieren des Bibliotheksbilds in dem dekodierten Bildpuffer gemäß dem Index 'Lib_index' des Bibliotheksbilds und der Größe des Bibliotheksbildpuffers in dem dekodierten Bildpuffer, wobei die Größe des Bibliotheksbildpuffers geringer oder gleich der Größe des dekodierten Bildpuffers ist;
(3) Codieren des aktuellen Bilds durch Verwenden der Referenzbilder, die das Bibliotheksbild enthalten, in dem dekodierten Bildpuffer, wobei das Bibliotheksbild dem Index 'Lib_index' entspricht.

10. - Gerät zur Videodecodierung, umfassend:
einen Parser, der die Referenzinformation eines aktuellen Bilds in einem Hauptbitstream decodiert, wobei der Parser die Information ausgibt, ob sich das aktuelle Bild auf ein Bibliotheksbild und den Index 'Lib_index' des Bibliotheksbilds, referenziert durch das aktuelle Bild, referenziert;
einen dekodierten Bildpuffer, der das Referenzbild speichert, das erforderlich ist, um das aktuelle Bild zu decodieren;
einen Aktualisierungsverwalter des dekodierten Bildpuffers in dem Decoder des Hauptbitstreams, wobei, wenn das Bibliotheksbild mit dem Index 'Lib_index' in dem decodierten Bildpuffer nicht existiert, der Verwalter den Index 'Lib_index' des Bibliotheksbilds, referenziert durch das aktuelle Bild, an die Außenseite des Decoders bereitstellt, das Bibliotheksbild, das dem Index 'Lib_index' entspricht, von der Außenseite erhält und das Bibliotheksbild in dem dekodierten Bildpuffer gemäß dem Index 'Lib_index' des Bibliotheksbilds und die Größe des Bibliotheksbildpuffers in dem dekodierten Bildpuffer aktualisiert, wobei die Größe des Bibliotheksbildpuffers geringer oder gleich der Größe des dekodierten Bildpuffers ist;
einen Dekompressor, der das aktuelle Bild dekomprimiert, um das rekonstruierte Bild des aktuellen Bilds durch Referenzieren auf das Bibliotheksbild zu erhalten, das in dem dekodierten Bildpuffer gespeichert ist;
einen Anschluss, der den Index 'Lib_index' des Bibliotheksbilds an die Außenseite ausgibt, und einen weiteren Anschluss, der das Bibliotheksbild importiert, das dem Index 'Lib_index' entspricht.

## Revendications

1. - Procédé de décodage vidéo, qui décode une image actuelle d'un flux binaire principal, comprenant :
(1) décoder les informations de référence de l'image actuelle du flux binaire principal pour obtenir les informations selon lesquelles l'image de référence de l'image actuelle contient une image de bibliothèque et l'index 'Lib_index' de l'image de bibliothèque référencée par l'image actuelle ;
(2) si l'image de bibliothèque avec l'index 'Lib_index' n'existe pas dans la mémoire tampon d'image décodée, par le décodeur du flux binaire principal, fournir l'index 'Lib_index' de l'image de bibliothèque référencée par l'image actuelle à l'extérieur du décodeur, obtenir l'image de bibliothèque correspondant à l'index 'Lib_index' à partir de l'extérieur, et mettre à jour l'image de bibliothèque dans la mémoire tampon d'image décodée, en fonction dudit index 'Lib_index' de l'image de bibliothèque et de la taille de la mémoire tampon d'image de bibliothèque dans la mémoire tampon d'image décodée, la taille de la mémoire tampon d'image de bibliothèque étant inférieure ou égale à la taille de la mémoire tampon d'image décodée ;
(3) décoder l'image actuelle à l'aide des images de référence contenant l'image de bibliothèque dans la mémoire tampon d'image décodée, l'image de bibliothèque correspondant audit index 'Lib_index'.

2. - Procédé selon la revendication 1, dans lequel l'opération de mise à jour de mémoire tampon d'image décodée comprend en outre :
si l'image de bibliothèque ayant l'index 'Lib_index' n'existe pas dans la mémoire tampon d'image décodée, par le décodeur du flux binaire principal, fournir l'index 'Lib_index' de l'image de bibliothèque référencée par l'image actuelle à l'extérieur du décodeur et obtenir l'image de bibliothèque correspondant à l'index 'Lib_index' à partir de l'extérieur ;
déplacer l'image de bibliothèque vers la mémoire tampon d'image décodée ;
marquer l'image comme image de bibliothèque et son index comme 'Lib_index'.

3. - Procédé selon la revendication 1, comprenant en outre l'un parmi ce qui suit :
(1) décoder les informations de taille de la mémoire tampon d'image de bibliothèque pour obtenir le fait que la taille de la mémoire tampon d'image de bibliothèque dans la mémoire tampon d'image décodée est NL en unité d'image ;
(2) définir la taille de la mémoire tampon d'image de bibliothèque dans la mémoire tampon d'image décodée comme nombre prédéterminé et fixe NL ;
(3) décoder les informations de taille de la mémoire tampon d'image décodée à partir du flux binaire principal pour obtenir le fait que la taille de la mémoire tampon d'image décodée est NP en unité d'image, ou définir la taille de la mémoire tampon d'image décodée comme nombre prédéterminé et fixe NP ; en fonction du fait qu'il y ait ND images non de bibliothèque dans la mémoire tampon d'image décodée, obtenir le fait que la taille de la mémoire tampon d'image de bibliothèque dans la mémoire tampon d'image décodée est NL en unité d'image, où NL=NP-ND.

4. - Procédé selon la revendication 3, dans lequel l'opération de mise à jour de la mémoire tampon d'image décodée comprend en outre :
(1) si le nombre de l'image de bibliothèque dans la mémoire tampon d'image décodée est inférieur à la taille NL de la mémoire tampon d'image de bibliothèque, déplacer l'image de bibliothèque correspondant à l'index 'Lib_index' vers la mémoire tampon d'image décodée, et marquer l'image comme image de bibliothèque et son index comme 'Lib_index' ;
(2) si le nombre de l'image de bibliothèque dans la mémoire tampon d'image décodée est égal à la taille NL de la mémoire tampon d'image de bibliothèque, supprimer une ou plusieurs images de bibliothèque à partir de la mémoire tampon d'image décodée selon un principe de gestion de mémoire tampon, déplacer l'image de bibliothèque correspondant à l'index 'Lib_index' vers la mémoire tampon d'image décodée, et marquer l'image comme image de bibliothèque et son index comme 'Lib_index'.

5. - Procédé selon la revendication 1, comprenant en outre :
décoder les informations de taille de la mémoire tampon d'image décodée à partir du flux binaire principal pour obtenir le fait que la taille de la mémoire tampon d'image décodée est NP en unité d'image, ou définir la taille de la mémoire tampon d'image décodée comme nombre prédéterminé et fixe NP ;
mettre à jour la mémoire tampon d'image décodée, l'opération contenant l'un par ce qui suit :
(1) si le nombre de l'image dans la mémoire tampon d'image décodée est inférieur à la taille NP de la mémoire tampon d'image décodée, déplacer l'image décodée actuelle dans la mémoire tampon d'image décodée ;
(2) si le nombre de l'image dans la mémoire tampon d'image décodée est égal à la taille NP de la mémoire tampon d'image décodée, supprimer une ou plusieurs images de bibliothèque déjà dans la mémoire tampon d'image décodée selon un principe de gestion de mémoire tampon, et déplacer l'image décodée actuelle dans la mémoire tampon d'image décodée.

6. - Procédé selon la revendication 1, comprenant en outre :
(1) ladite opération de mise à jour de la mémoire tampon d'image décodée comprenant : par le décodeur du flux binaire principal, fournir l'index 'Lib_index' de l'image de bibliothèque référencée par l'image actuelle à l'extérieur du décodeur, obtenir l'image de bibliothèque correspondant à l'index 'Lib_index' à partir de l'extérieur, déplacer l'image de bibliothèque vers la mémoire tampon d'image décodée, et marquant l'image comme image de bibliothèque et son index comme 'Lib_index' ;
(2) supprimer toutes les images de bibliothèque de la mémoire tampon d'image décodée après décodage de l'image actuelle.

7. - Procédé selon la revendication 4 et la revendication 5, dans lequel l'opération de suppression d'une ou plusieurs images de bibliothèque déjà dans la mémoire tampon d'image décodée selon un principe de gestion de mémoire tampon comprend l'un des éléments suivants :
(1) enregistrer l'instant temporel de chaque image de bibliothèque dans la mémoire tampon d'image décodée lorsqu'elle est déplacée dans la mémoire tampon, et supprimer une ou plusieurs images de bibliothèque déjà dans la mémoire tampon d'image décodée selon le principe du 'premier entré-premier sorti' qui signifie qu'au moins une image de bibliothèque déplacée en premier dans la mémoire tampon d'image décodée est supprimée ;
(2) enregistrer les temps d'utilisation de chaque image de bibliothèque dans la mémoire tampon d'image décodée, et supprimer une ou plusieurs images de bibliothèque déjà dans la mémoire tampon d'image décodée selon le principe du 'moins fréquemment utilisé' qui signifie qu'au moins une image de bibliothèque qui est utilisée le moins de fois est supprimée ;
(3) enregistrer l'instant temporel d'utilisation de chaque image de bibliothèque dans la mémoire tampon d'image décodée, et supprimer une ou plusieurs images de bibliothèque déjà dans la mémoire tampon d'image décodée selon le principe du 'moins récemment utilisé' qui signifie qu'au moins une image de bibliothèque dont l'instant temporel d'utilisation le plus récent est le plus éloigné de l'instant temporel de décodage de l'image actuelle est supprimée.

8. - Procédé selon la revendication 3, dans lequel l'opération de mise à jour de la mémoire tampon d'image décodée comprend en outre :
lorsque la taille NL de la mémoire tampon d'image de bibliothèque dans la mémoire tampon d'image décodée est égale à 1, si l'index 'Lib_index' de l'image de bibliothèque référencée par l'image actuelle est différent de l'index de l'image de bibliothèque stockée dans la mémoire tampon d'image décodée, supprimer toutes les images de bibliothèque stockées dans la mémoire tampon d'image décodée, le décodeur du flux binaire principal fournissant l'index 'Lib_index' de l'image de bibliothèque référencée par l'image actuelle à l'extérieur du décodeur, obtenant l'image de bibliothèque correspondant à l'index 'Lib_index' à partir de l'extérieur, déplaçant l'image de bibliothèque vers la mémoire tampon d'image décodée et marquant l'image comme image de bibliothèque et son index comme 'Lib_index'.

9. - Procédé de codage vidéo pour coder une image actuelle dans un flux binaire principal, comprenant :
(1) obtenir l'index 'Lib_index' de l'image de bibliothèque référencée par l'image actuelle ;
(2) si l'image de bibliothèque avec l'index 'Lib_index' n'existe pas dans la mémoire tampon d'image décodée, par le codeur du flux binaire principal, fournir l'index 'Lib_index' de l'image de bibliothèque référencée par l'image actuelle à l'extérieur du codeur, obtenir l'image de bibliothèque correspondant à l'index 'Lib_index' à partir de l'extérieur, et mettre à jour l'image de bibliothèque dans la mémoire tampon d'image décodée en fonction de l'index 'Lib_index' de l'image de bibliothèque et de la taille de la mémoire tampon d'image de bibliothèque dans la mémoire tampon d'image décodée, la taille de la mémoire tampon d'image de bibliothèque étant inférieure ou égale à la taille de la mémoire tampon d'image décodée ;
(3) coder l'image actuelle en utilisant les images de référence contenant l'image de bibliothèque dans la mémoire tampon d'image décodée, l'image de bibliothèque correspondant audit index 'Lib_index'.

10. - Appareil de décodage vidéo, comprenant :
un analyseur qui décode les informations de référence d'une image actuelle dans un flux binaire principal, l'analyseur délivrant les informations indiquant le point de savoir si l'image actuelle fait ou non référence à une image de bibliothèque et l'index 'Lib_index' de l'image de bibliothèque référencée par l'image actuelle ;
une mémoire tampon d'image décodée qui stocke l'image de référence nécessaire pour décoder l'image actuelle ;
un gestionnaire de mise à jour de la mémoire tampon d'image décodée dans le décodeur du flux binaire principal, dans lequel, si l'image de bibliothèque avec l'index 'Lib_index' n'existe pas dans la mémoire tampon d'image décodée, le gestionnaire fournit l'index 'Lib_index' de l'image de bibliothèque référencée par l'image actuelle à l'extérieur du décodeur, obtient l'image de bibliothèque correspondant à l'index 'Lib_index' à partir de l'extérieur et met à jour l'image de bibliothèque dans ladite mémoire tampon d'image décodée en fonction de l'index 'Lib_index' de l'image de bibliothèque et de la taille de la mémoire tampon d'image de bibliothèque dans la mémoire tampon d'image décodée, la taille de la mémoire tampon d'image de bibliothèque étant inférieure ou égale à la taille de la mémoire tampon d'image décodée ;
un décompresseur qui décompresse l'image actuelle pour obtenir l'image reconstruite de l'image actuelle en se référant à l'image de bibliothèque stockée dans la mémoire tampon d'image décodée ;
un port qui délivre l'index 'Lib_index' de l'image de bibliothèque à l'extérieur et un autre port qui importe l'image de bibliothèque correspondant à l'index 'Lib_index'.
